# EUROPEAN PATENT APPLICATION

(11) **EP 1 492 327 A1**
(43) Date of publication of application: **29.12.2004**
(21) Application number: 03712952.5
(22) Date of filing: 26.03.2003
(51) Int. Cl.: H04N 1/38, H04N 1/403, G06T 7/00

(54) **IMAGE PROCESSING DEVICE**

(30) Priority: 01.04.2002 JP 2002098326
(71) Applicant: PFU Limited, Kahoku-shi, Ishikawa 929-1192 (JP)
(72) Inventor: OKUBO, Nobuyuki, c/o PFU LIMITED, Kahoku-gun, Ishikawa 929-1192 (JP)
(74) Representative: Reichel, Wolfgang, Dipl.-Ing.
(86) International application number: PCT/JP2003/003668
(87) International publication number: WO 2003/084211

(57) **Abstract**

An image processing apparatus includes extracting unit 13 generating a binary image from image data and extracting fragments having successive pixels; determining unit 14 determining whether or not an image on a page is an intended original image on the page on the basis of characteristics of the extracted fragments; and output unit 17 eliminating image data on a page containing no intended original image and outputting image data on a page containing an intended original image. The extracting unit 13 has generating unit to generating binary data from multi-valued image data. The generating unit binarizes a pixel of interest on the basis of a relative difference in density between the pixel of interest and the adjusting pixels.

## Description

### Technical Field

This invention relates to an image processing apparatus, and more particularly to an image processing apparatus which makes it possible to omit a page containing no image from image processing.

### Background Art

It is conventional that read image data read from an original (original image) by a scanner is stored in an image data file or is delivered such an image data file through the Internet. Also, it is conventional that, in a photocopying machine, image data is read from the image data file and printed on a paper.

To read the original image, it is convenient to use an automatic original feeder (ADF) which can feed a original into the reading position, automatically. In that case, a user specifies distinction as to whether the original to be read is a double-sided original containing an original image on both sides or a single-sided original containing an original image only on a single side. By this operation, the original image can be read from the double-sided original or the single sided original, and image data can be generated and outputted on a page-by-page basis.

As described above, conventionally, in a case that double-sided originals and single-sided originals are mixed in the original to be read and that an ADF is used to read such image data from mixed originals, the user should specify the double-sided original as the distinction. Consequently, it cannot be avoidable that the back side (blank page which contains no image) of the single-sided originals is also read. As a result, in a photocopying machine, blank pages are printed which are not needed to be printed, and also the needless process for printing dirt and stains read from the blank page. In a communication device, a file that is not needed to be sent is sent and a needless process such as an output process is performed at the destination. In a storage device, a file that is not needed to be stored occupies a storage area. The term blank page in this description refers to any page on which no primary image (which is drawn or to be read) is provided such as character, even if its color is light-colored, not white.

One approach to solving the above-described problems may be to judge whether or not a page is blank on the basis of the ratio of black pixels to white pixels in a monochrome image page, or whether or not a page is blank on the basis of the difference in density between the average color of pixels and a predetermined color in a multi-valued image page. Another approach is proposed in Japanese Patent Application Laid-Open No. 6-261168 A and No. 7-129738 A, for example. That is, the number of effective dots in a page is counted, and the number is compared with a predetermined value. The number of dots is counted on the front side and on the back of a sheet respectively, and the counts are compared with each other. And, the result of the comparison is used to judge whether or not the page is blank, during image data processing.

However, it is difficult to set condition for judging whether or not the page is blank. According to some condition, an erroneous judgment could be made in the following cases.

For example, in a case that an original includes a number of pages, the last page may contain only one line of text or two. In this a case (or a short-text case), the last page is erroneously judged to be a blank page since the ratio of black pixels is low, although the last page is a page (non-blank page) which contains primary images such as text or graphics.

Also, in a case that image read from an original is processed by monochrome image processing, the original may be drawn on a color paper such as a gray or pink. In this case (or a "dark-ground-color" case), black pixels are scattered which is used for representing the color (ground color) of the color paper in a certain ratio, when the color of the paper is regarded as binary image data. As a result of this, the blank page is erroneously judged to be a non-blank page, although the blank page is a page which is a blank and does not contain a primary image such as text or graphics.

Further, in another case, due to a shadow near an edge of a page at the time of reading, unwanted (not primary) image data may appear during reading which is elongated shaded image at the edge. In this case (or a "shadow" case), even if the page is a blank page, the blank page is erroneously judged to be a non-blank page, due to black pixels created by the shadow.

Still further, in a case that filing holes are provided in a original, unwanted (not primary) shaded image data may appear during reading due to the filing holes. In this case (or a "filing-hole" case), even if the page is a blank page, the blank page is erroneously judged to be a non-blank page, due to black pixels created by the shadow of the filing holes.

It is an object of the present invention to provide an image processing apparatus that determines whether or not read data is image data read from an original to exclude the pages which contains no original image from image processing.

### Disclosure of the Invention

An image processing apparatus according to the present invention comprises an extracting unit to generate a binary image from image data and to extract fragments having continuous pixels, a determining unit to determine whether or not an image of a page is an image primary drawn on the page on a basis of characteristics of the extracted fragments, and an output unit to eliminate image data of a page containing no image primary drawn and to output image data of a page containing an image primary drawn.

The image processing apparatus according to the present invention does not determine whether or not there is an original image on the basis of an entire page. The apparatus can determine whether or not the page is to be processed by focusing on a region that is likely to contain an original image by extracting fragment of pixels which are continuous each other. Thus, it can be easily determined whether the page is blank page or not. For example, the apparatus can prevent to judge a page containing a few character images such as one line or two as a blank page, to judge a (dark) color page containing no image as a non-blank page, to judge a blank page on which shaded image data is generated at its edge as a non-blank page, and to judge a blank page on which shaded image data caused by filing holes as a non-blank page. Thus, when originals are read by using an automatic original feeder without distinction of single- sided originals and double-sided originals, an image processing can be realize which excludes pages containing no image, and image data can be generated and outputted on a page-by-page basis. Therefore, printing of needless pages, sending of needless files, and storage occupation by needless data can be avoided.

### Brief Description of the Drawings

FIG. 1 is a block diagram of an image processing apparatus.
FIG. 2 is a block diagram of the image processing apparatus, and in particular, FIG. 2A shows a structure of a scanner in which the image processing apparatus of the present invention is provided and FIG. 2B shows a structure of another scanner in which the image processing apparatus of the present invention is provided.
FIG. 3 is a flowchart of image processing.
FIG. 4 is a flowchart of a determination process.

### Best Mode for Carrying Out the Invention

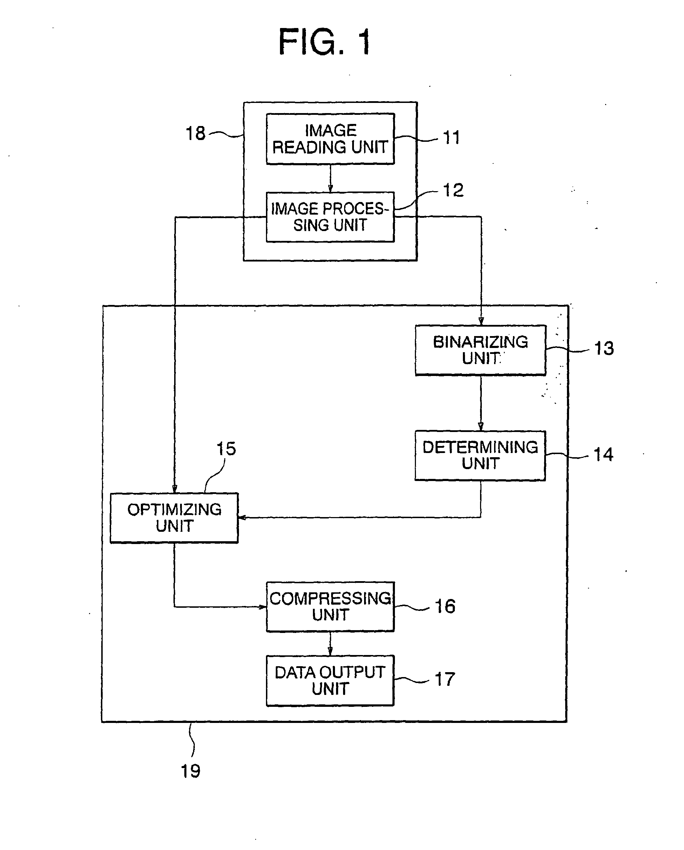

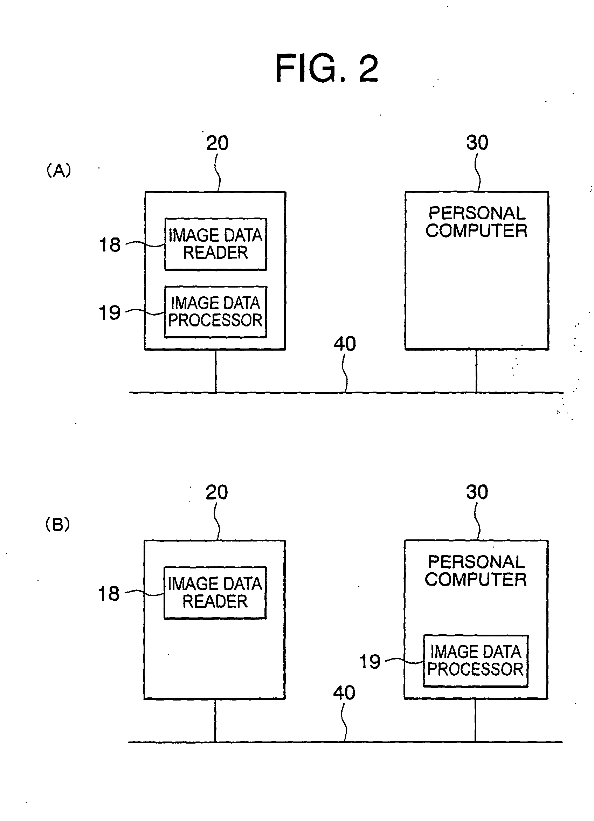

FIGS. 1 and 2A is a block diagram of an image processing apparatus and in particular FIG. 1 shows a structure of the image processing apparatus of the present invention and FIG. 2A shows a structure of a scanner in which the image processing apparatus of the present invention is provided.

The image processing apparatus of the present invention comprises an image reading unit 11, an image processing unit 12, a binarizing unit 13, a determining unit 14, an optimizing unit 15, a compressing unit 16, and a data output unit 17. The image reading unit 11 and the image processing unit 12 constitute an image data reader 18. And, binarizing unit 13, the determining unit 14, the optimizing unit 15, a compressing unit 16, and the data output unit 17 constitute an image data processor 19. In this example, the image data reader 18 and the image data processor 19 are provided in a scanner (scanner apparatus) 20, as shown in FIG. 2A. The scanner 20 is connected to a personal computer 30 through a network 40 such as LAN (Local Area Network).

The image reading unit 11 comprises well-known CCD (Charge Coupled Device) or the like. The image reading unit 11 optically reads an image (image originally drawn) from a double-sided original or a single-sided original, which is automatically placed on a reading place by an automatic original feeder, and amplifies it. As a result, the image reading unit 11 outputs read signals (analog signals) of each color of R (red), G (green) and B (blue) to the image processing unit 12. The image reading unit 11 reads a color image, gray image or monochrome image from original images according to a read mode instruction inputted through an operation panel (not shown).

The image processing unit 12 converts the analog RGB read signals received from the image reading unit 11 into digital image data of continuous-tone or multivalue (multi-valued image data), for example color image data (or gray image data). The image processing unit 12 sends the multi-valued image data to the binarizing unit 13 and the optimizing unit 15.

The binarizing unit 13 binarizes the multi-valued image data, which is generated by reading image having scales such as colorscale image or grayscale image, to generate binary data (monochrome image), and sends it to the determining unit 14. In this example, the binarizing unit 13 performs particular binarization (hereinafter called relative binarization) rather than usual binarization (hereinafter called absolute binarization) on the multi-valued image data (image having scales) received from the image processing unit 12 such as the color image or gray image. The relative binarization is based on the relative difference in density (signal value) between the pixel of interest and the surrounding pixels (in practice, the absolute binarization is also performed as will be described later). The absolute binarization is based on the absolute density (signal value) of the pixel of interest.

The absolute binarization is a process usually performed using a predetermined threshold. That is, when the signal value of a pixel is greater than the threshold, the pixel is assumed to be black or "1." When the signal value is smaller than the threshold, the pixel is assumed to be white or "0." In this process, when the density of ground color (basic color or base color) of an original is higher than the threshold, the whole area of the original is assumed to be black, and consequently an image of characters etc. is lost in the ground color. In contrast, the relative binarization is an unrelated process with the fact whether the ground color of the original is achromatic or chromatic. In the relative binarization, the density (signal value) of the pixel of interest is compared with the average of the densities (signal values) of the surrounding pixel in a predetermined range (for example 3x3 pixels or 5x5 pixels, excluding the pixel of interest). When the difference between them is greater than or equal to a predetermined value (density difference) (the pixel is darker or blacker than the surrounding pixels), the pixel of interest is assumed to be black, or "1." When the density difference is less than the preset value (the pixel is paler or whiter than the surrounding pixels), the pixel is assumed to be white, or "0." In this process, even when the ground color of the original is fairly dark, the ground color (whole area) of the original is assumed to be white and the image of characters etc. is assumed to be black.

In this example, actually, the absolute binarization is performed prior to the relative binarization. That is, it is determined whether or not the density (signal value) of a pixel of interest is smaller than the predetermined threshold. For example, when the values (densities) of image data are represented by the 256-scale, where "0" represents white and "255" represents black, the threshold may be set to 10 (or a several tens). This means that the threshold is well smaller than a threshold (typically 128 in the 256-scale) used in typical absolute binarization. When the density (signal value) of a pixel of interest is smaller than the threshold, relative binarization is not applied to that pixel. Instead, the pixel of interest is assumed to be white, or "0" in the relative binarization (or, it is assumed to be white, "0," as when relative binarization were performed). When relative binarization is used only, unwanted images would be extracted which is produced by images on the back of the read original coming through or dirt on the original. In this case, the intensities of the pixels of interest are typically 10 or lower. Therefore, the extraction of such unwanted image can be prevented in most cases.

The determining unit 14 determines on a page-by-page basis whether or not data is image data read from an original on which character images are formed, and sends the result of the determination to the optimizing unit 15. In particular, the determining unit 14 extracts fragments of the image, which are regions (clusters) of continuous black pixels, based on binary data on a monochrome image received through the binarizing unit 13 by well-known clustering, and then assigns an identifier (label) to each of them. That is, labeling process is performed. On the basis of the result of the labeling, the determining unit 14 obtains characteristics such as the size (whether or not it greater than a predetermined minimum size) and position of each fragment image. Based on the information, the determining unit 14 determines whether or not the fragment is image data generated by reading the original image. Accordingly, the determining unit 14 implements extracting unit and determining unit.

The optimizing unit 15 performs optimizing process to optimize the image data only on the image data generated by reading the original image, on the basis of the determination. That is, the optimizing unit 15 eliminates pages which were judged as blank pages by the determining unit 14 from the image data received directly from the image processing unit 12. The optimizing unit 15 sends the image data to the compressing unit 16.

The compressing unit 16 compresses the optimized image data by using a compression technology suitable for the type of the image data or the image primary drawn, and sends the compressed image data to the data output unit 17.

The data output unit 17 sends the image data (file) to the personal computer 30 over the network 40. The data output unit 17 may sends the image data to an external device (not shown) such as a printer or facsimile, instead of the personal computer 30. The optimizing unit 15, compressing unit 16, and data output unit 17 in combination constitutes output unit.

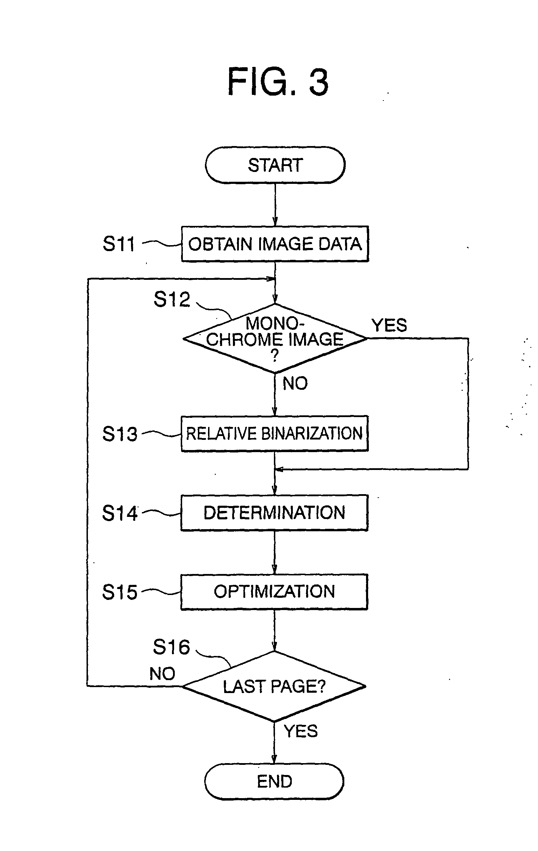

FIG. 3 shows a flowchart of image processing performed in the image processing apparatus according to the present invention.

The image reading unit 11 sends read signals of each color of RGB which are read from an image primary drawn to the image processing unit 12. The image processing unit 12 converts the read signals into multi-valued image data by A/D conversion, and sends the image data to the binarizing unit 13. Thus, the binarizing unit 13 obtains the image data (step S11). The binarizing unit 13 determines whether or not the obtained image data is a binary data or monochrome image (step S12).

When the image data is not a monochrome image, the binarizing unit 13 performs relative binarization (in addition to absolute binarization) (step S13). That is, when the image data is multi-valued data such as a color image or gray image, the binarizing unit 13 performs relative binarization using the difference in density between the pixel of interest and the surrounding pixels to generate binary data or a monochrome image, and sends the binary data to the determining unit 14. By this processing, the image primary drawn can be detected as the monochrome image, even in the case of "short-text" or "dark-ground-color" described earlier. On the other hand, when the image data is a monochrome image, the binarizing unit 13 skips step 13 and sends the image data to the determining unit 14. Then, the process proceeds to step S14.

The determining unit 14 performs a determining process (step S14). In particular, the determining unit 14 labels fragment images extracted from the received binary data or monochrome image, and then determines whether or not the image data is read from an image on the original on the basis of information such as the number of the fragment images, the size, shape, and position of each fragment image. The determining unit 14 notifies the optimizing unit 15 of the result.

In response to this notification, the optimizing unit 15 eliminates pages judged as blank pages from the image data received directly from the image processing unit 12, on the basis of the determination for each page of the image data received from the determining unit 14. By this, the optimizing unit 15 optimizes the image data and sends the optimized image data to the compressing unit 16 (step S15). Then, the optimizing unit 15 determines whether or not the process is completed on the last page (step S16). If not, the optimizing unit 15 repeats the step S12 and the subsequent steps. Then, the compressing unit 16 compresses the optimized image data to reduce the file size (or memory requirement), and the data output unit 17 can output the reduced image data file to the external device.

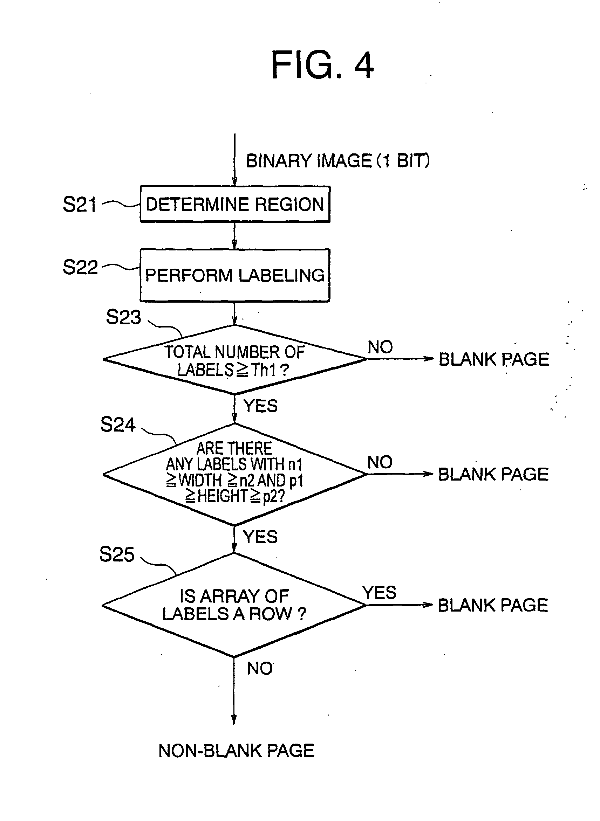

In step S14 in FIG. 3, the determining unit 14 performs a process shown in FIG. 4. FIG. 4 shows a flowchart of a determination process performed by the determining unit 14.

The determining unit 14 determines a subject region on which the unit 14 performs the determination process in the read image data (step S21). In particular, the determining unit 14 determines a region from which an image is read when the original is placed in proper place, as the subject region. Consequently, fragment images, which is read from shadow in regions near the edges of the original, are determined as image data that is not to be processed. Thus, unnecessary regions are omitted from the determination process on the image data. By this process, an unwanted image can be eliminated even in a "shadow" case as described earlier.

The determining unit 14 then extracts fragment images having continuous black pixels on the basis of the received monochrome image or binary data, and labels each of the fragments, or labeling processing is performed (step S22). Here, the determining unit 14 may judge fragment images that are smaller than a predetermined minimum size (for example, a spot smaller than a period (,)) as data read from dust, and may exclude from labeling.

The determining unit 14 then determines whether or not the total number of the labels is greater than or equal to a label count threshold Th1 (step S23). If not, the determining unit 14 regards the image data as a scattering spot image and judges the page as a blank page.

On the other hand, when the total number of labels is greater than the threshold Th1, the determining unit 14 further determines whether or not there are labeled fragment images which correspond to a conditions of size in the labeled fragment images (step S24). In the conditions, the width is represented as n1 (dots or number of pixels) ≥ width ≥ n2 (dots), and height is represented as p1 (dots) ≥ height ≥ p2 (dots). In particular, the determining unit 14 takes the labeled fragment images one by one and determines whether or not the size of the fragment is on the order of the size of a character. The size of a character may be within the range from n1 to n2 dots in width and p1 to p2 dots in height, depending on the read resolution (dpi) and the font size (points) used. Thus, when there are no fragment images of a size within the above range, the determining unit 14 determines that the page is a blank page containing no characters. For example, a fragment image is excluded which is a shadow in a region near an edge of the original and has the size of 2 (to 4, i.e., more than one) characters. In practice, the lower limit of the range is determined by taking into account the sizes of small characters (or punctuation marks) such as "period in Japanese language", "comma in Japanese language", "." and ",".

When there are fragment images of the size within the range, the determining unit 14 further determines whether or not any of the labeled fragment images appear in row (or in column) (step S25). That is, the determining unit 14 determines the positional relationship between the labeled fragment images. The position of the shadows of filing holes can be predicted with sufficient accuracy because the position of the holes is standardized. In addition, the fragment images of such shadows appear in row or in column substantially vertical or horizontal to the read region (namely the subject region determined at step 21). Therefore, such a region (in practice, a marginal region) is predetermined. And, when fragment images are in the predetermined regions and appear substantially along the x-axis (or the y-axis) with almost no displacement toward the y-axis (or the x-axis), the determining unit 14 determines that the fragment images are arranged in row (or column) and judges the page as a blank page. Thus, unwanted images can be eliminated which appear in a "shadow" and "filing hole" cases as described earlier.

When there are hand-written characters near a filing hole, the fragment images of the characters do not constitute the row. Therefore, the fragment images of those characters can be obtained by removing the fragment images which constitute the row above described. Consequently, the page can be left as a non-blank page while removing the image of the filing hole, thereby improving the image quality. The same applies to shadows which appear near the edges of an original.

As described above, the present invention can focus on a fragment image in captured image data and determine whether or not the fragment image is an image primary drawn. Thus, whether or not a page is a blank can be easily determined. Consequently, erroneous determination can be avoided. For example, the present invention can prevent to judge a page containing a few character as a blank page, to judge a colored page containing no image as a non-blank page, to judge a blank page as a non-blank page due to shadow at its edge, and to judge a blank page as a non-blank page due to filing holes. Consequently, blank pages can automatically be eliminated from image data in copying and therefore needless printing, file sending, and storage can be avoided.

While the present invention has been described with respect to embodiments thereof, various variations can be embodied without departing from the spirit of the present invention.

For example, while the image processing apparatus of the present invention provided in the scanner 20 has been described as shown in FIG. 2A, the image processing apparatus of the present invention is not limited to this. For example, as shown in FIG. 2B, only the image data reader 18 may be provided in the scanner 20, and the image data processor 19 may be provided in a personal computer 30 (or a printer or facsimile). In that case, image data sent form the image data reader 18 is received by the image data processor 19 in the personal computer 30 through the network 40.

Furthermore, even when the image processing apparatus of the present invention is provided in the scanner 20 as shown in FIG. 2A, the compressing unit 16 (and data output unit 17) may be provided in a personal computer 30 (or a printer or facsimile).

### Industrial Applicability

As described above, according to the present invention, the image processing apparatus does not determine whether or not there is an original image on the basis of the entire page, and determines whether or not the page is to be processed by focusing on the region that is likely to contain an image by extracting a fragment in which pixels continue. Thus, whether the page is blank or not can be easily determined. Accordingly, when originals are read by using an automatic original feeder without distinction of single- sided originals and double-sided originals, an image processing can be realize which excludes pages containing no image, and image data can be generated and outputted on a page-by-page basis. Therefore, printing of needless pages, sending of needless files, and storage occupation by needless data can be avoided.

## Claims

1. An image processing apparatus, comprising:
an extracting unit to generate a binary image from image data and to extract fragments having continuous pixels;
a determining unit to determine whether or not an image of a page is an image primary drawn on the page on a basis of characteristics of the extracted fragments; and
an output unit to eliminate image data of a page containing no image primary drawn and to output image data of a page containing an image primary drawn.

2. The image processing apparatus according to claim 1, wherein the extracting unit further comprises generating unit to generate binary data from multi-valued image data, and the generating unit binarizes a pixel of interest on a basis of at least a relative difference in density between the pixel of interest and adjusting pixels.

3. The image processing apparatus according to claim 1, wherein the determining unit determines whether or not the fragment is the image primary drawn on the basis of size of the extracted fragments.

4. The image processing apparatus according to claim 1, wherein the determining unit determines that the fragments are a character image to be processed in a case that the extracted fragments are arranged in a range on the order of the size of a character.

5. The image processing apparatus according to claim 1, wherein the determining unit determines that the fragments are image data that is not to be processed in a case that the extracted fragment have characteristics corresponding to a filing hole of the original.

6. The image processing apparatus according to claim 1, wherein the determining unit determines the fragments are image data that is not be processed in a case that the extracted fragments have characteristics that can appear in a margin of the original during reading,.
